(19) Europäisches Patentamt
European Patent Office
Office européen des brevets

(11) Numéro de publication : **0 036 798**
**B1**

(12) **FASCICULE DE BREVET EUROPÉEN**

(45) Date de publication du fascicule du brevet : **19.12.84**

(51) Int. Cl.³ : **G 01 N 31/22**

(21) Numéro de dépôt : **81400366.1**

(22) Date de dépôt : **10.03.81**

(54) **Procédé de dosage d'uranium (VI) ou d'acide dialkyldithiophosphorique présent dans un solvant organique.**

(30) Priorité : **17.03.80 FR 8005908**

(43) Date de publication de la demande :
**30.09.81 Bulletin 81/39**

(45) Mention de la délivrance du brevet :
**19.12.84 Bulletin 84/51**

(84) Etats contractants désignés :
**BE DE GB**

(56) Documents cités :
**FR-A- 2 348 728**
**FR-A- 2 442 797**

(73) Titulaire : **COMMISSARIAT A L'ENERGIE ATOMIQUE**
**Etablissement de Caractère Scientifique Technique et Industriel**
**B.P. 510**
**F-75752 Paris Cedex 15 (FR)**

(72) Inventeur : **Fitoussi, Richard**
**6, rue de Châtillon**
**F-75014 Paris (FR)**
Inventeur : **Lours, Sylvie**
**113, Avenue de la Division Leclerc**
**F-92290 Châtenay Malabry (FR)**
Inventeur : **Musikas, Claude**
**12, Rue du Moulin de la Planche**
**F-91120 Villebon (FR)**

(74) Mandataire : **Mongrédien, André et al**
**c/o BREVATOME 25, rue de Ponthieu**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 036 798 B1

**Description**

La présente invention a pour objet un procédé de dosage d'uranium (VI) ou d'acide dialkyldithiophosphorique présent dans un solvant organique comprenant un composé organophosphoré neutre à atome d'oxygène donneur d'électrons, tel qu'un solvant organique constitué par du phosphate de tributyle dilué dans du dodécane.

On sait que dans les installations d'extraction d'uranium à partir de minerais ou dans les installations de retraitement de combustibles irradiés, on réalise généralement une extraction de l'uranium dans un solvant organique, puis une réextraction de cet uranium dans une solution aqueuse.

Aussi, pour contrôler le fonctionnement de ces installations, il est d'un grand intérêt de pouvoir vérifier rapidement quelles sont les teneurs résiduelles en uranium des solvants organiques sortant de l'étage de réextraction.

Actuellement le dosage de l'uranium présent dans ces solvants organiques est réalisé par une méthode colorimétrique au moyen de dibenzoylméthane. Cependant, cette méthode nécessite des opérations complexes et ne permet pas de ce fait d'obtenir facilement et rapidement les résultats du dosage. De plus, selon ce procédé, la coloration est due à une transition intramoléculaire du ligand lié, ce qui n'est pas spécifique.

La présente invention a précisément pour objet un procédé de dosage d'uranium ou d'acide dialkyldithiophosphorique présent dans un solvant organique, qui a justement l'avantage d'être simple, rapide et fiable.

Le procédé, selon l'invention, de dosage d'uranium (VI) sous forme de sel d'uranyle ou d'acide dialkyldithiophosphorique présent dans un solvant organique comprenant un composé organophosphoré neutre à atome d'oxygène donneur d'électrons, se caractérise en ce que l'on ajoute respectivement audit solvant organique un acide dialkyldithiophosphorique ou un sel d'uranyle de façon à transformer respectivement la totalité de l'uranium (VI) ou de l'acide dialkyldithiophosphorique présent dans ledit solvant en un complexe mixte uranium $UO_2^{2+}$-anion de l'acide dialkyldithiophosphorique-composé organophosphoré, et en ce que l'on mesure la densité optique du solvant contenant en solution ledit complexe de façon à déterminer la concentration en complexe dudit solvant et sa teneur respectivement en uranium ou en acide dialkyldithiophosphorique.

Selon le procédé de l'invention, on transforme l'uranium (VI) ou l'acide dialkyldithiophosphorique en un complexe uranium VI-composé organophosphoré-acide dialkyldithiophosphorique, soit en faisant réagir l'uranium avec un excès d'acide dialkyldithiophosphorique, soit en faisant réagir l'acide dialkyldithiophosphorique avec un excès d'ions uranium (VI).

La formation de ce complexe correspond au schéma réactionnel suivant :

$$UO_2^{2+}A_2Z_2 + 2\ HDTP \rightleftharpoons \left[UO_2(DTP)_2Z\right] + 2\ HA + Z$$

dans lequel Z représente un composé organophosphoré neutre à atome d'oxygène donneur d'électrons, HDTP représente un acide dialkyldithiophosphorique et A représente un anion tel que $Cl^-$ ou $NO_3^-$.

Etant donné que le complexe ainsi obtenu qui possède une bande de transfert de charge soufre-uranium assez intense est coloré, sa concentration dans le solvant peut être mesurée ensuite par spectrophotométrie, ce qui permet de déterminer la concentration en uranium (VI) ou en acide dialkyldithiophosphorique du solvant organique.

Ce procédé de dosage présente l'avantage d'être d'une mise en œuvre très simple et de pouvoir ainsi être automatisé facilement. En effet, il suffit d'ajouter au solvant organique un seul réactif constitué soit par un sel d'uranium, soit par de l'acide dialkyldithiophosphorique, sans changement de phase, et d'effectuer ensuite uniquement une mesure de la densité optique du solvant.

De plus, il permet d'assurer avec une bonne précision, le dosage de traces d'uranium, notamment dans l'intervalle de concentrations $2 \cdot 10^{-5}$ à $5 \cdot 10^{-4}$ M/l d'uranium

Selon l'invention, le composé organophosphoré comportant un atome d'oxygène donneur d'électrons présent dans le solvant organique est avantageusement du tributyl phosphate ou un composé répondant à la formule suivante :

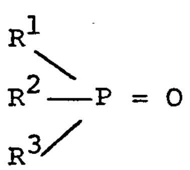

dans laquelle $R^1$, $R^2$ et $R^3$ qui peuvent être identiques ou différents, représentent un radical alkyle, alkoxyalkyle ou aryle.

A titre d'exemple de tels composés organophosphorés, on peut citer l'oxyde de trioctylphosphine, l'oxyde de di-n-hexyloctoxyméthyl phosphine, l'oxyde de di-phényl-octoxyméthyl phosphine, l'oxyde de di-isobutyl-octoxyméthyl phosphine, l'oxyde de di-n-butyl-octoxyméthyl phosphine et l'oxyde de di-n-pentyl-octoxyméthyl phosphine.

Selon un premier mode de réalisation du procédé de l'invention, destiné au dosage d'uranium (VI)

sous forme de sel d'uranyle présent dans un solvant organique, on ajoute au solvant organique un excès d'acide dialkyldithiophosphorique de façon à transformer la totalité de l'uranium présent dans le solvant organique en un complexe mixte uranium $UO_2^{2+}$-anion de l'acide dialkyldithiophosphorique-composé organophosphoré, et on mesure la densité optique du solvant contenant ledit complexe de façon à déterminer la concentration en complexe dudit solvant organique et sa teneur en uranium.

Selon l'invention, l'acide dialkyldithiophosphorique est avantageusement constitué par l'acide di-2-éthylhexyl-dithiophosphorique, l'acide dibutyldithiophosphorique, ou encore l'acide bis(2,6-diméthyl-4-heptyl)dithiophosphorique. De préférence, on utilise l'acide dibutyldithiophosphorique.

Selon l'invention, pour complexer la totalité de l'uranium présent dans le solvant organique, on ajoute au solvant une quantité d'acide dialkyldithiophosphorique telle qu'elle corresponde à un excès d'acide par rapport à la quantité d'uranium présente dans le solvant organique.

Par ailleurs, lorsque l'on utilise le procédé de l'invention, pour doser l'uranium dans un solvant ayant servi à l'extraction de nitrate d'uranyle, on utilise un excès plus important d'acide dialkyldithiophosphorique, car une partie de ce réactif peut être dégradé par les ions nitreux éventuellement présents dans le solvant organique contenant du nitrate d'uranyle.

Pour des concentrations en uranium de 5 à 100 mg/l, on utilise avantageusement une concentration en acide dialkyldithiophosphorique supérieure à 0,1 M/l de solvant.

Après formation du complexe, la mesure de la densité optique du solvant organique contenant le complexe est effectuée au moyen de dispositifs classiques tels qu'un spectrophotomètre, avantageusement à une longueur d'onde de 390 nm.

Selon un second mode de réalisation du procédé de l'invention adapté au dosage d'acide dialkyl dithiophosphorique présent dans un solvant organique, on ajoute audit solvant organique un excès de sel d'uranyle de façon à transformer la totalité de l'acide dialkyldithiophosphorique présent dans le solvant en un complexe mixte uranium $UO_2^{2+}$-anion de l'acide dialkyldithiophosphorique-composé organophosphoré, et on mesure la densité optique du solvant contenant ledit complexe de façon à déterminer la concentration en complexe du solvant et sa teneur en acide dialkyldithiophosphorique.

Le sel d'uranyle utilisé peut être constitué par du nitrate ou du chlorure d'uranyle.

De préférence, on utilise le chlorure d'uranyle qui ne conduit pas à la formation de sous-produits gênants.

Ce second mode de mise en œuvre du procédé de l'invention peut être utilisé pour doser les traces d'un acide dialkyldithiophosphorique tel que l'acide dibutyldithiophosphorique, l'acide di-2-éthylhexyl-dithiophosphorique et l'acide bis(2,6-diméthyl-4-heptyl)dithiophosphorique.

D'autres caractéristiques et avantages du procédé de l'invention apparaîtront mieux à la lecture des exemples suivants donnés bien entendu à titre illustratif et non limitatif, en référence aux dessins annexés sur lesquels :

la figure 1 est un diagramme représentant les variations de la densité optique du solvant à 390 nm en fonction de sa concentration en uranium,

la figure 2 est un diagramme représentant les variations de la densité optique du solvant à 390 nm en fonction de sa concentration en acide dibutyldithiophosphorique (DBDTP),

la figure 3 est un diagramme représentant les variations de la densité optique du solvant à 390 nm en fonction du temps (en min) dans le cas où l'on a en solution organique des ions chlorures (courbe 1) ou nitrate (courbe 2). Dans les deux cas, la concentration en acide dibutyldithiophosphorique était voisine de 0,001 M,

la figure 4 est un diagramme représentant les variations de la densité optique du solvant à 390 nm en fonction de sa teneur en acide dibutylphosphorique.

Exemple 1

Cet exemple se rapporte au dosage de traces d'uranium présentes dans un solvant organique constitué par du tributyl phosphate dilué dans du dodécane (hyfrane), la teneur en tributyl phosphate du solvant étant de 30 % en volume, ce qui correspond aux solvants utilisés industriellement.

On ajoute au solvant contenant les traces d'uranium une quantité d'acide dibutyldithiophosphorique telle qu'elle corresponde à 0,2 M d'acide par litre de solvant, puis on détermine au moyen d'un spectrophotomètre CARY 17 la densité optique du solvant ainsi traité, à une longueur d'onde de 390 nm.

Les résultats obtenus avec des solutions dont la concentration en uranium varie de 0 à $2{,}5 \cdot 10^{-4}$ M/l sont donnés sur la figure 1 qui représente les variations de la densité optique D du solvant, en fonction de la concentration en uranium de la solution de départ qui a été déterminée par potentiométrie au bichromate de potassium.

Au vu de cette figure, on constate que la loi de Beer-Lambert est bien vérifiée car la densité optique D du solvant augmente linéairement avec sa teneur en uranium, c'est-à-dire avec sa teneur en complexe, ce qui correspond à l'équation :

$$D = \varepsilon \cdot l \cdot C$$

dans laquelle $\varepsilon$ représente le coefficient d'extinction molaire, l la longueur de la cuve du spectrophotomètre et C la concentration en complexe du solvant.

Par ailleurs, on a vérifié que les résultats obtenus étaient similaires lorsqu'on effectuait la mesure de densité optique à 360 nm, exception faite du coefficient d'extinction molaire qui est alors plus important.

Enfin, en utilisant différentes concentrations en acide dibutyldithiophosphorique (DBDTP), on a obtenu les mêmes résultats et vérifié que les coefficients d'extinction molaire à 390 nm sont voisins de 3 260 comme le montrent les résultats du tableau ci-après.

Tableau

| Concentration en acide DBDTP (M) | $\varepsilon$ |
|---|---|
| 0,05 | 3260 |
| 0,1 | 3280 |
| 0,15 | 3240 |

Exemple 2

Cet exemple se rapporte au dosage de traces d'acide dibutyl dithiophosphorique dans un solvant organique constitué également par du tributylphosphate dilué dans du dodécane (tributyl phosphate 30 %-hyfrane 70 %).

On ajoute au solvant organique contenant les traces d'acide dibutyl dithiophosphorique un sel d'uranium constitué soit par du nitrate d'uranyle, soit par du chlorure d'uranyle, en quantité telle qu'elle corresponde à une concentration en sel d'uranium du solvant organique de $3 \cdot 10^{-2}$ M/l de solvant. On mesure ensuite la densité optique du solvant en utilisant un spectrocolorimètre à 390 nm.

Les résultats obtenus pour diverses concentrations en acide dibutyl dithiophosphorique du solvant sont donnés sur la figure 2 qui représente les variations de la densité optique du solvant en fonction de sa concentration en acide dibutyl dithiophosphorique.

Sur cette figure, la droite correspond au dosage effectué au moyen de chlorure d'uranyle et la courbe en pointillé au dosage effectué au moyen de nitrate d'uranyle.

On constate ainsi que lorsqu'on utilise du nitrate d'uranyle, la loi de Beer-Lambert n'est pas bien suivie pour de faibles concentrations en acide dibutyl dithiophosphorique.

On suppose que dans ce cas, le nitrate d'uranyle qui est obtenu par extraction de l'uranium en milieu nitrique, contient une certaine quantité d'acide nitreux qui dégrade l'acide dibutyl dithiophosphorique selon le schéma réactionnel suivant :

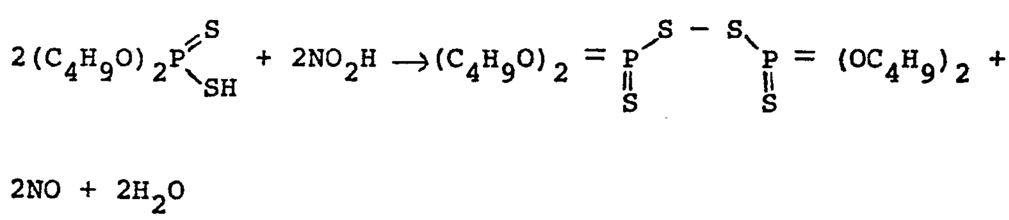

Aussi, pour la mesure de faibles concentrations en acide dibutyl dithiophosphorique, il est préférable d'ajouter l'uranium sous la forme de chlorure, plutôt que sous la forme de nitrate.

Toutefois, on peut obtenir des résultats satisfaisants avec le nitrate d'uranyle en suivant la densité optique du solvant en fonction du temps afin de déterminer par extrapolation la concentration en complexe du solvant au moment du mélange comme cela est illustré dans l'exemple 3 ci-après.

Exemple 3

Dans cet exemple, on étudie la stabilité de la coloration du solvant en fonction du temps dans le cas du dosage de faibles quantités d'acide dibutyl dithiophosphorique au moyen de nitrate ou de chlorure d'uranyle.

Pour réaliser ce dosage, on ajoute à un solvant organique identique à celui des exemples 1 et 2, ayant une concentration en acide dibutyl dithiophosphorique de $10^{-3}$ M, un excès de nitrate d'uranyle ou de chlorure d'uranyle, puis on mesure la densité optique du solvant organique ainsi traitée sous 390 nm, en utilisant le même spectrocolorimètre que dans l'exemple 2, et on suit son évolution en fonction du temps.

Les résultats obtenus sont donnés sur la figure 3 qui illustre les variations de la densité optique (D) en

fonction du temps (en minutes), la courbe 1 se rapportant au cas de l'addition de chlorure d'uranyle et la courbe 2 au cas de l'addition de nitrate d'uranyle.

On constate que dans le cas de la courbe 2, la coloration disparaît rapidement, ce qui confirme bien l'hypothèse d'une dégradation du réactif par un agent oxydant tel que l'acide nitreux présent dans le solvant.

Exemple 4

Cet exemple illustre l'influence de la présence de traces d'acide dibutyl phosphorique dans le solvant organique, sur les résultats obtenus par le procédé de l'invention.

On sait qu'au cours du retraitement des combustibles irradiés, les solvants organiques constitués par du phosphate de tributyle sont dégradés par hydrolyse et par radiolyse alpha en donnant notamment comme sous-produit de l'acide dibutyl phosphorique. Or la présence de ce sous-produit apparaît gênante pour effectuer un dosage colorimétrique de l'uranium par formation de complexe, car c'est un bon agent complexant de l'uranium.

Aussi, dans cet exemple, on étudie l'influence de la concentration en acide dibutyl phosphorique du solvant organique sur les résultats obtenus par le procédé de dosage de l'invention.

Les solvants organiques utilisés qui sont identiques à celui de l'exemple 1 contiennent chacun $3 \cdot 10^{-4}$ M/l d'$UO_2^{2+}$ et des quantités variables d'acide dibutyl phosphorique.

Pour réaliser le dosage, on ajoute au solvant 0,2 M/l d'acide dibutyl dithiophosphorique, puis on détermine la densité optique du solvant ainsi traité, à 390 nm, en utilisant le même spectrocolorimètre que dans l'exemple 2.

Les résultats obtenus sont donnés sur la figure 4 qui représente les variations de la densité optique en fonction de la concentration en acide dibutyl phosphorique (DBP) du solvant (en g/l).

Au vu de cette figure, on constate que la densité optique est peu modifiée lorsque la concentration en acide dibutyl phosphorique est inférieure à 0,2 g/l, ce qui est généralement le cas dans les solvants organiques provenant des installations de traitement de combustibles irradiés.

Aussi, la présence d'acide dibutyl phosphorique n'apparaît que trop gênante pour le dosage colorimétrique.

De plus, pour éviter son influence éventuelle sur les résultats de dosage, on peut utiliser la méthode d'étalonnage interne qui consiste à effectuer deux mesures de densité optique, l'une sur le solvant à doser et l'autre sur le solvant à doser auquel on ajoute un solvant étalon, afin d'obtenir par extrapolation la concentration inconnue.

**Revendications**

1. Procédé de dosage d'uranium (VI) sous forme de sel d'uranyle ou d'acide dialkyldithiophosphorique présent dans un solvant organique comprenant un composé organophosphoré neutre à atome d'oxygène donneur d'électrons, caractérisé en ce que l'on ajoute respectivement audit solvant organique un acide dialkyldithiophosphorique ou un sel d'uranyle de façon à transformer respectivement la totalité de l'uranium (VI) ou de l'acide dialkyldithiophosphorique présent dans ledit solvant en un complexe mixte uranium $UO_2^{2+}$-anion de l'acide dialkyldithiophosphorique-composé organophosphoré, et en ce que l'on mesure la densité optique du solvant contenant en solution ledit complexe de façon à déterminer la concentration en complexe dudit solvant et sa teneur respectivement en uranium (VI) ou en acide dialkyldithiophosphorique.

2. Procédé selon la revendication 1, caractérisé en ce que le composé organophosphoré neutre à atome d'oxygène donneur d'électrons répond à la formule suivante :

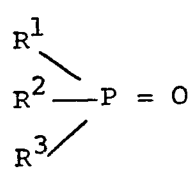

dans laquelle $R^1$, $R^2$ et $R^3$ qui peuvent être identiques ou différents représentent un radical alkyle, alkoxyalkyle ou aryle.

3. Procédé selon la revendication 2, caractérisé en ce que ledit composé organophosphoré neutre est choisi dans le groupe comprenant l'oxyde de trioctyl phosphine et l'oxyde de di-n-hexyl-octoxyméthyl phosphine.

4. Procédé selon la revendication 1, caractérisé en ce que le composé organophosphoré neutre à atome d'oxygène donneur d'électrons est du tributylphosphate.

5. Procédé de dosage d'uranium (VI) sous forme de sel d'uranyle selon l'une quelconque des revendications 1 à 4, caractérisé en ce qu'il consiste à ajouter au solvant organique un excès d'acide

dialkyldithiophosphorique de façon à transformer la totalité de l'uranium (VI) présent dans ledit solvant en un complexe mixte uranium $UO_2^{2+}$-anion de l'acide dialkyldithiophosphorique-composé organophosphoré, et à mesurer la densité optique du solvant contenant ledit complexe de façon à déterminer la concentration en complexe dudit solvant et sa teneur en uranium (VI).

6. Procédé selon la revendication 5, caractérisé en ce que l'acide dialkyldithiophosphorique est l'acide dibutyldithiophosphorique.

7. Procédé selon l'une quelconque des revendications 5 et 6, caractérisé en ce que l'on mesure la densité optique du solvant à 390 nm.

8. Procédé selon l'une quelconque des revendications 5 à 7, caractérisé en ce que la quantité d'acide dialkyldithiophosphorique ajoutée audit solvant est supérieure à 0,1 M d'acide par litre de solvant.

9. Procédé selon l'une quelconque des revendications 1 à 4, de dosage d'acide dialkyldithiophosphorique, caractérisé en ce qu'il consiste à ajouter audit solvant organique un excès de sel d'uranyle de façon à transformer la totalité de l'acide dialkyldithiophosphorique présent dans le solvant en complexe mixte uranium $UO_2^{2+}$-anion de l'acide dialkyldithiophosphorique-composé organophosphoré, et à mesurer la densité optique du solvant contenant ledit complexe de façon à déterminer la concentration en complexe du solvant et sa teneur en acide dialkyldithiophosphorique.

10. Procédé selon la revendication 9, caractérisé en ce que le sel d'uranyle est le nitrate d'uranyle.

11. Procédé selon la revendication 9, caractérisé en ce que le sel d'uranyle est du chlorure d'uranyle.

12. Procédé selon l'une quelconque des revendications 9 à 11, caractérisé en ce que l'on mesure la densité optique à 390 nm.

13. Procédé selon l'une quelconque des revendications 9 à 12, caractérisé en ce que l'acide dialkyldithiophosphorique est l'acide di-2-éthylhexyl-dithiophosphorique, l'acide dibutyldithiophosphorique ou l'acide bis(2,6-diméthyl-4-heptyl)dithiophosphorique.

**Claims**

1. Process for measurement of the quantity of uranium (VI) in the form of uranyl salt or of dialkyldithiophosphoric acid present in an organic solvent comprising a neutral organophosphorus compound with an electron-donor oxygen atom, characterized in that a dialkyldithiophosphoric acid or a uranyl salt are respectively added to the organic solvent whereby completely to convert all the uranium (VI) or the dialkyldithiophosphoric acid respectively present in the solvent into a mixed uranium complex of $UO_2^{2+}$-dialkyldithiophosphate anion-organophosphorus compound, and in that the optical density of the solvent, containing said complex in solution, is measured whereby to determine the concentration of the complex in solution and its respective content of uranium (VI) or dialkyldithiophosphoric acid.

2. Process according to claim 1, characterized in that the neutral organophosphorus compound with an electron-donor oxygen atom has the formula

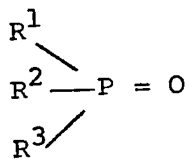

wherein $R^1$, $R^2$ and $R^3$, which may be the same or different, each represents an alkyl, alkoxyalkyl or aryl group.

3. Process according to claim 2, characterized in that the said neutral organophosphorus compound is selected from the group comprising trioctyl phosphine oxide and di-n-hexyl-octyloxymethyl phosphine oxide.

4. Process according to claim 1, characterized in that the neutral organophosphorus compound with an electron-donor oxygen atom is tributyl phosphate.

5. Process for measurement of the quantity of uranium (VI) in the form of uranyl salt according to any one of claims 1 to 4, characterized in that an excess of a dialkyldithiophosphoric acid is added, whereby completely to convert all the uranium (VI) present in the solvent into a mixed uranium complex of $UO_2^{2+}$-dialkyldithiophosphate anion-organophosphorus compound, and in that the optical density of the solvent, containing said complex is measured whereby to determine the concentration of the complex in solution and its uranium (VI) content.

6. Process according to claim 5, characterized in that the dialkyldithiophosphoric acid is dibutyldithiophosphoric acid.

7. Process according to either of claims 5 and 6, characterized in that the optical density of the solvent is measured at 390 nm.

8. Process according to any one of claims 5 to 7, characterized in that the quantity of dialkyldithiophosphoric acid added to said solvent is greater than 0.1 M of acid per litre of solvent.

9. Process according to any one of claims 1 to 4, for measuring the quantity of dialkyldithiophosphoric acid, characterized in that it comprises adding an excess of uranyl salt to the said organic solvent

whereby completely to convert all the dialkyldithiophosphoric acid present in the solvent into a mixed uranium complex of $UO_2^{2+}$-dialkyldithiophosphate anion-organophosphorus compound, and measuring the optical density of the solvent containing said complex whereby to determine the concentration of the complex in the solvent and its content of dialkyldithiophosphoric acid.

10. Process according to claim 9, characterized in that the uranyl salt is uranyl nitrate.

11. Process according to claim 9, characterized in that the uranyl salt is uranyl chloride.

12. Process according to any one of claims 9 to 11, characterized in that the optical density is measured at 390 nm.

13. Process according to any one of claims 9 to 12, characterized in that the dialkyldithiophosphoric acid is di-2-ethylhexyl-dithiophosphoric acid, dibutyldithiophosphoric acid or bis(2,6-dimethyl-4-heptyl) dithiophosphoric acid.

**Ansprüche**

1. Verfahren zur Dosierung von Uran (VI) in Form eines Uranylsalzes oder von Dialkyldithiophosphorsäure, das bzw. die in einem organischen Lösungsmittel vorliegt, das eine neutrale Organophosphorverbindung mit einem Elektronen abgebenden Sauerstoffatom umfaßt, dadurch gekennzeichnet, daß man dem organischen Lösungsmittel jeweils eine Dialkyldithiophosphorsäure oder ein Uranylsalz zugibt, um jeweils die Gesamtmenge des Urans (VI) oder der Dialkyldithiophosphorsäure, die in dem Lösungsmittel vorhanden ist, in ein komplexes gemischtes Uran $UO_2^{2+}$-Anion der Dialkyldithiophosphorsäure-Organophosphor-Verbindung umzuwandeln und daß man die optische Dichte des den Komplex in Lösung enthaltenden Lösungsmittels mißt zur Bestimmung der Konzentration des Komplexes in dem Lösungsmittel und seines jeweiligen Gehaltes an Uran (VI) oder an Dialkyldithiophosphorsäure.

2. Verfahren nach Anspruch 1, dadurch gekennzeichnet, daß die neutrale Organophosphorverbindung mit einem Elektronen abgebenden Sauerstoffatom der folgenden Formel entspricht

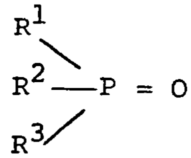

worin $R^1$, $R^2$ und $R^3$, die identisch oder verschieden sein können, einen Alkyl-, Alkoxyalkyl- oder Arylrest bedeuten.

3. Verfahren nach Anspruch 2, dadurch gekennzeichnet, daß die neutrale Organophosphorverbindung ausgewählt wird aus der Gruppe, die umfaßt Trioctylphosphinoxid und Di-n-hexyloctoxymethylphosphinoxid.

4. Verfahren nach Anspruch 1, dadurch gekennzeichnet, daß die neutrale Organophosphorverbindung mit einem Elektronen abgebenden Sauerstoffatom Tributylphosphat ist.

5. Verfahren zur Dosierung von Uran (VI) in Form eines Uranylsalzes nach einem der Ansprüche 1 bis 4, dadurch gekennzeichnet, daß es darin besteht, daß dem organischen Lösungsmittel ein Überschuß an Dialkyldithiophosphorsäure zugegeben wird, um die Gesamtmenge des in dem Lösungsmittel vorhandenen Urans (VI) in ein komplexes gemischtes Uran $UO_2^{2+}$-Anion der Dialkyldithiophosphorsäure-Organophosphorverbindung umzuwandeln und um die optische Dichte des den Komplex enthaltenden Lösungsmittels zu messen, um die Konzentration des Komplexes in dem Lösungsmittel und seinen Gehalt an Uran (VI) zu bestimmen.

6. Verfahren nach Anspruch 5, dadurch gekennzeichnet, daß die Dialkyldithiophosphorsäure Dibutyldithiophosphorsäure ist.

7. Verfahren nach einem der Ansprüche 5 und 6, dadurch gekennzeichnet, daß man die optische Dichte des Lösungsmittels bei 390 nm mißt.

8. Verfahren nach einem der Ansprüche 5 bis 7, dadurch gekennzeichnet, daß die dem Lösungsmittel zugegebene Dialkyldithiophosphorsäuremenge mehr als 0,1 M Säure pro Liter Lösungsmittel beträgt.

9. Verfahren nach einem der Ansprüche 1 bis 4 zur Dosierung der Dialkyldithiophosphorsäure, dadurch gekennzeichnet, daß es darin besteht, daß dem organischen Lösungsmittel ein Überschuß des Uranylsalzes zugegeben wird, um die Gesamtmenge der in dem Lösungsmittel vorhandenen Dialkyldithiophosphorsäure in ein komplexes gemischtes Uran $UO_2^{2+}$-Anion der Dialkyldithiophosphorsäure-Organophosphorverbindung umzuwandeln und die optische Dichte des den Komplex enthaltenden Lösungsmittels zu messen, um die Konzentration des Komplexes in dem Lösungsmittel und seinen Gehalt an Dialkyldithiophosphorsäure zu bestimmen.

10. Verfahren nach Anspruch 9, dadurch gekennzeichnet, daß das Uranylsalz Uranylnitrat ist.

11. Verfahren nach Anspruch 9, dadurch gekennzeichnet, daß das Uranylsalz Uranylchlorid ist.

12. Verfahren nach einem der Ansprüche 9 bis 11, dadurch gekennzeichnet, daß man die optische Dichte bei 390 nm mißt.

13. Verfahren nach einem der Ansprüche 9 bis 12, dadurch gekennzeichnet, daß die Dialkyldithiophosphorsäure Di-2-ethylhexyl-dithiophosphorsäure, Dibutyldithiophosphorsäure oder Bis-(2,6-dimethyl-4-heptyl)dithiophosphorsäure ist.

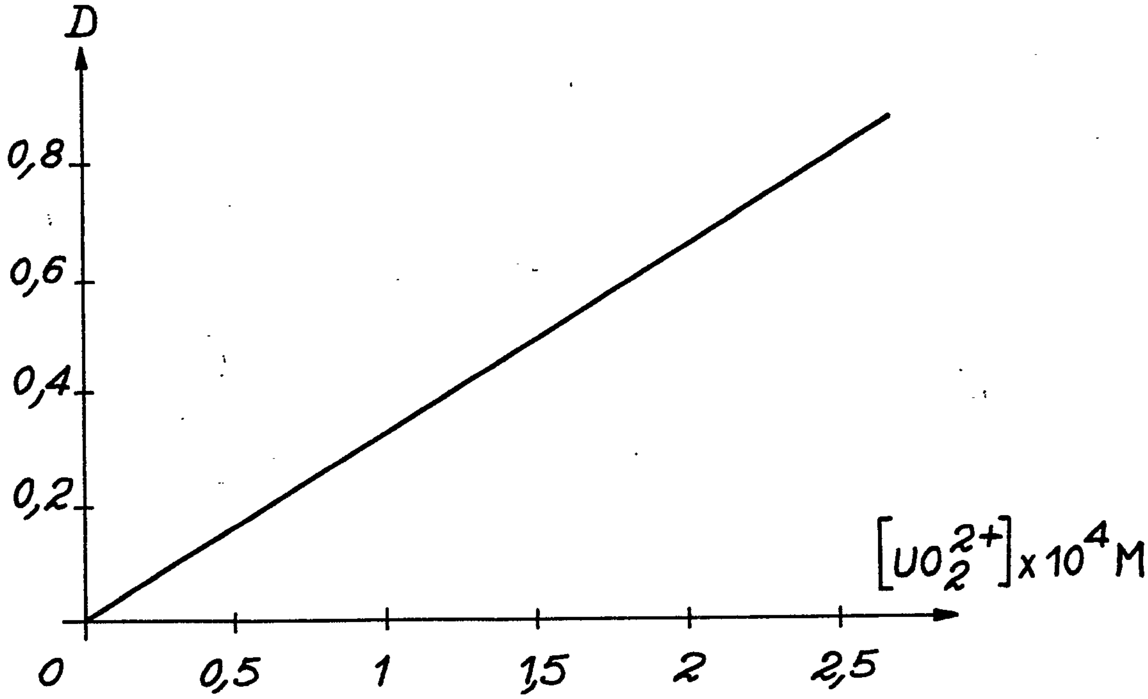
D
0,8
0,6
0,4
0,2
$[UO_2^{2+}] \times 10^4$ M
0
0,5
1
1,5
2
2,5

FIG. 1

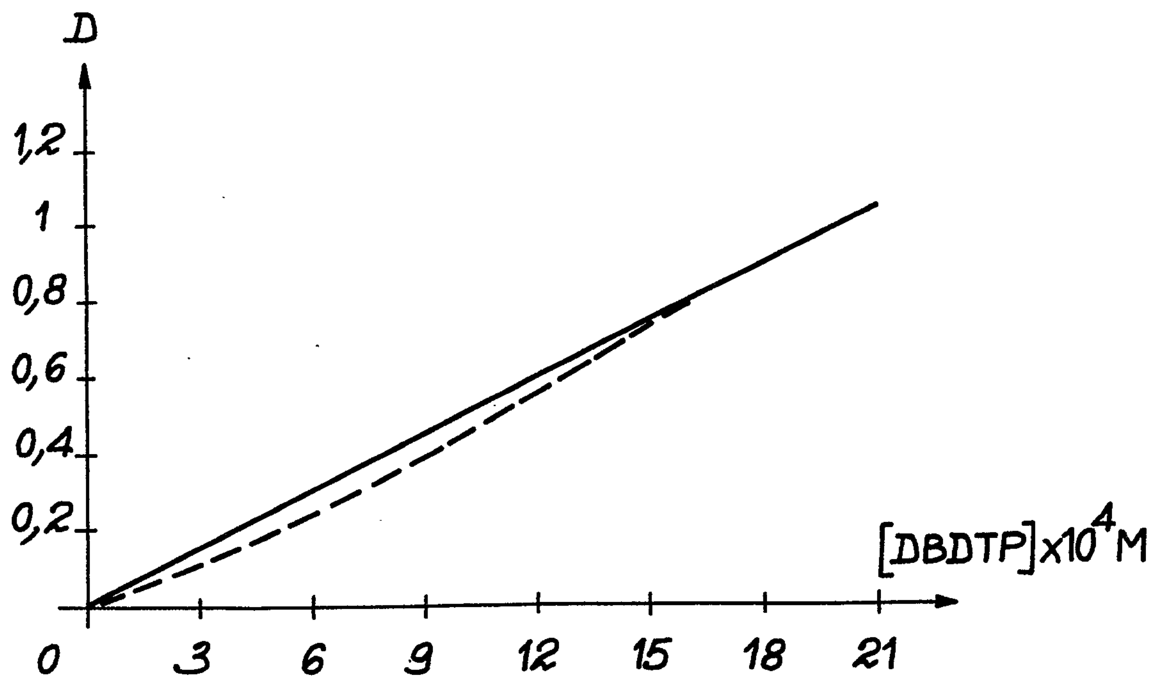
D
1,2
1
0,8
0,6
0,4
0,2
[DBDTP]$\times 10^4$ M
0
3
6
9
12
15
18
21

FIG. 2

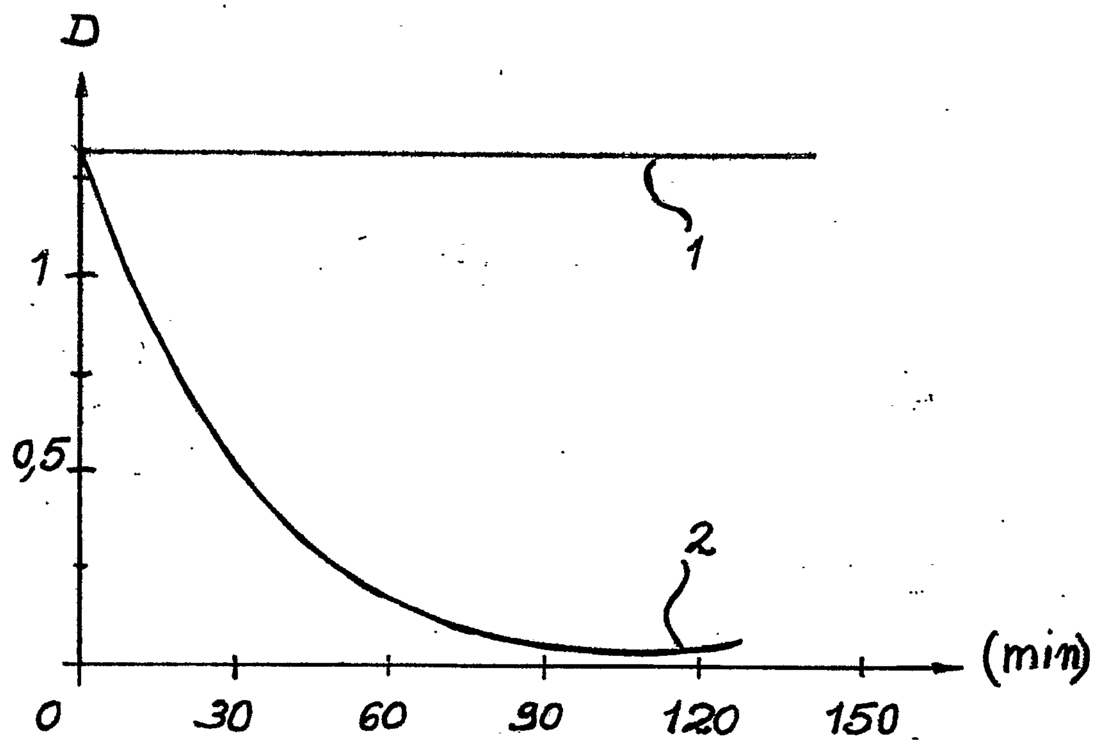


FIG. 3

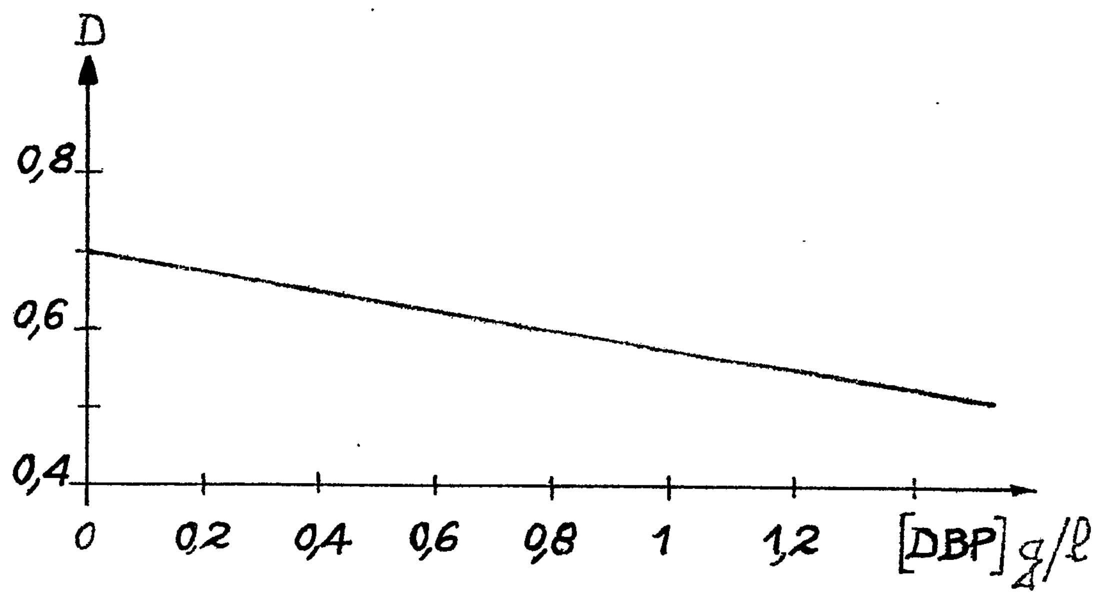


FIG. 4